# EUROPEAN PATENT SPECIFICATION

(11) **EP 4 175 040 B1**
(45) Date of publication and mention of the grant of the patent: **08.07.2026**
(21) Application number: 22828627.4
(22) Date of filing: 25.05.2022
(51) Int. Cl.: H01M 50/358, H01M 50/342, H01M 10/658, H01M 50/211, H01M 50/249

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 21.06.2021 KR 20210080123
(43) Date of publication of application: 03.05.2023
(73) Proprietor: LG Energy Solution, Ltd., Seoul 07335 (KR)
(72) Inventor: SHIN, Juhwan, Daejeon 34122 (KR); SEONG, Junyeob, Daejeon 34122 (KR); LEE, Hyoungsuk, Daejeon 34122 (KR); YOON, Young Il, Daejeon 34122 (KR)
(74) Representative: Plasseraud IP
(86) International application number: PCT/KR2022/007401
(87) International publication number: WO 2022/270779

(56) References cited:
- EP-B1- 3 266 056
- WO-A1-2016/132404
- WO-A1-2019/127957
- WO-A1-2020/215443
- CN-A- 111 769 229
- CN-U- 210 110 904
- CN-U- 210 723 159
- CN-U- 212 967 875
- JP-A- 2014 078 517
- JP-B2- 6 729 031
- US-A1- 2018 105 062

## Description

### [TECHNICAL FIELD]

The present invention relates to a battery pack and a device including the same, and more particularly to a battery pack in which when gas and flame are generated in a part of battery cells, the generated gas and flame are effectively discharged to the outside of the battery pack while preventing a heat propagation phenomenon between adjacent battery cells, and a device including the same.

### [BACKGROUND]

Secondary batteries, which are easily applied to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate by-products from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is mounted in a metal can, and a pouch-type secondary battery in which the electrode assembly is mounted in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules can be mounted together with various control and protection systems such as a BMS (battery management system) and a cooling system to form a battery pack.

In particular, the battery pack is composed of a structure made by combining a plurality of battery modules, and when a part of battery modules become an overvoltage, overcurrent or overheat state, the safety and operating efficiency of the battery pack may be problematic. In particular, in order to improve the mileage, the battery pack capacity tends to gradually increase. As the energy inside the pack increases accordingly, it is necessary to design a structure that meets the strengthened safety standards and ensures the safety of vehicles and drivers. For this purpose, particularly, in order to prevent a thermal runaway within the battery pack and a heat propagation phenomenon between battery cells in advance, there is a growing need for a structure capable of effectively discharging gases and flames generated in a part of battery cells and minimizing the damage.

Examples of background art can be found in EP3266056B1, WO2019/127957A1, WO2020/215443A1, WO2016/132404A1, JP2014078517A and US2018/105062A1.

### [DETAILED DESCRIPTION OF THE INVENTION]

### [Technical Problem]

It is an object of the present invention to provide a battery pack in which when gas and flame are generated in a part of battery cells, the generated gas and flame are effectively discharged to the outside of the battery pack while preventing a heat propagation phenomenon between adjacent battery cells, and a device including the same.

The objects of the present invention are not limited to the above-mentioned objects, and other objects which are not described herein should be clearly understood by those skilled in the art from the following detailed description and the accompanying drawings.

### [Technical Solution]

According to independent claim 1 there is provided a battery pack comprising: a lower pack frame on which a plurality of battery cell arrays are mounted; a plurality of cover parts, wherein each one of the plurality of cover parts is located in an upper part of a respective pair of battery cell arrays of the plurality of battery cell arrays; and a venting part that is mounted on the plurality of cover parts and extends along the longitudinal direction of the lower pack frame, wherein each one of the plurality of cover parts covers the upper part of the respective pair of battery cell arrays arranged so as to face each other with respect to the width direction of the lower pack frame, and wherein a first venting hole is formed on each one of the plurality of cover parts and extends along the longitudinal direction of the venting part, and the venting part covers the first venting hole.

Each one of the plurality of cover parts may include a first plate, a second plate located in a lower part of the first plate, and a side surface part that connects an edge of the first plate and an edge of the second plate.

The first venting hole may be formed in a central part of the first plate.

A lower surface of the second plate may make contact with an upper part of the battery cell array.

At least one second venting hole may be formed in the second plate, with the second venting hole being formed at a position adjacent to the front and rear surfaces of the battery cell array.

The venting part may include a first venting part extending along the length direction of the plurality of cover parts and a second venting part extending in a direction perpendicular to the first venting part.

The second venting part may extend up to the bottom surface of the plurality of cover parts through the center of the first venting hole.

The lower pack frame may include a bottom part in contact with the lower surface of the battery cell array, and a frame part in contact with at least one side surface of the battery cell array.

The frame part may be made of a heat insulating member.

The frame part may include a side surface frame extending from the edge of the bottom part toward the upper part, and an inner frame located inside the side surface frame, and the plurality of battery cell arrays may be divided each other by the side surface frame and the inner frame.

The battery pack may further include a first fastening member that fixes a part of an edge of a cover part of the plurality of cover parts to an upper part of the inner frame, and may further include a second fastening member that fixes a part of an edge of the venting part to an upper surface of a cover part of the plurality of cover parts.

At least one rupture part is formed on the outer surface of the side surface frame, and the rupture part may be located adjacent to one end of the venting part.

At least one through part is formed on the inner surface of the side surface frame, and the through part may communicate with one end of the venting part.

According to another embodiment of the present invention, there is provided a device comprising the above-mentioned battery pack.

### [Advantageous Effects]

According to the embodiments, the present invention relates to a battery pack that includes a cover part and a venting part for guiding a discharge direction of gas and flame, and a device comprising the same. When gas and flame are generated in some battery cells, the gas and flame can be guided and discharged in a certain direction, whereby the generated gas and flame can be effectively discharged to the outside of the battery pack while preventing a heat propagation phenomenon between adjacent battery cells.

The effects of the present invention are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a battery pack according to an embodiment of the present invention;
Fig. 2 is an exploded perspective view of a cover part and a venting part in the battery pack of Fig. 1;
Fig. 3 is a perspective view which shows the remaining components excluding a cover part and a venting part in the battery pack of Fig. 1;
Fig. 4 is an exploded perspective view of a lower pack frame in the battery pack of Fig. 1;
Fig. 5 is a cross-sectional view of the cover part of Fig. 2 taken along the cutting line C-C';
Fig. 6 is an enlarged view of a region a of Fig. 1;
Fig. 7 is a diagram which shows a part of a cross section taken along the cutting line A-A' of Fig. 1;
Fig. 8 is a diagram which enlarges and shows a part of Fig. 7; and
Fig. 9 is a diagram which shows a part of a cross section taken along the cutting line B-B' of Fig. 1.

### [DETAILED DESCRIPTION OF THE EMBODIMENTS]

Hereinafter, various embodiments of the present invention will be described in detail with reference to the accompanying drawings so that those skilled in the art can easily carry out them. The present invention is defined by the appended claims.

Portions that are irrelevant to the description will be omitted to clearly describe the present invention, and like reference numerals designate like elements throughout the description.

Further, in the drawings, the size and thickness of each element are arbitrarily illustrated for convenience of description, and the present invention is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, the battery pack according to an embodiment of the present invention will be described.

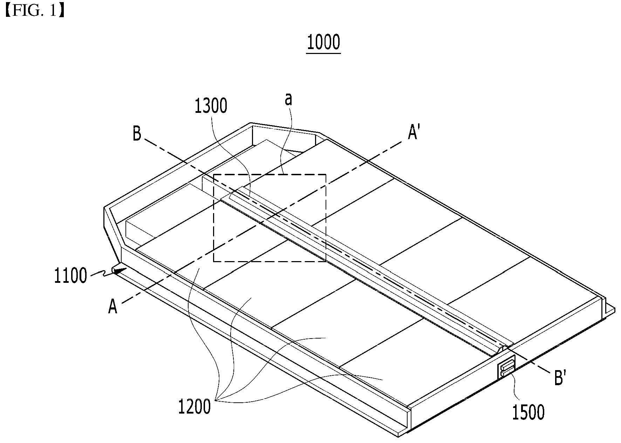

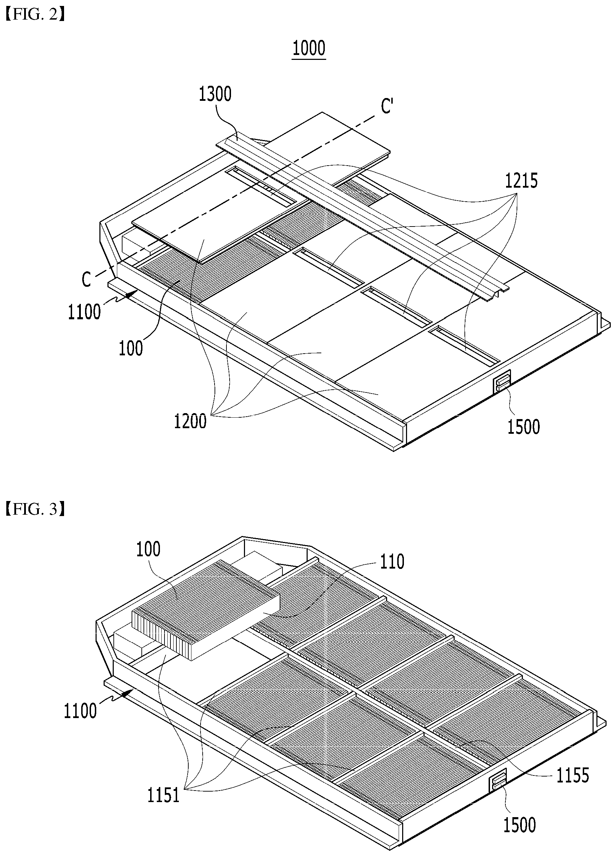

Fig. 1 is a perspective view of a battery pack according to an embodiment of the present invention. Fig. 2 is an exploded perspective view of a cover part and a venting part in the battery pack of Fig. 1.

Referring to Figs. 1 and 2, a battery pack 1000 according to the claimed invention a lower pack frame 1100 on which a plurality of battery cell arrays 100 are mounted; a plurality of cover parts 1200 located in an upper part of the plurality of battery cell arrays 100; and a venting part 1300 that is mounted on the plurality of cover parts 1200 and extends along the longitudinal direction of the lower pack frame 1100.

More specifically, the cover part 1200 extends along the width direction of the lower pack frame 1100. Here, the width direction of the lower pack frame 1100 may be the same as the length direction of the pair of battery cell arrays 100 arranged so as to face each other.

Also, the cover part 1200 covers the upper part of the pair of battery cell arrays 100 arranged so as to face each other with respect to the width direction of the lower pack frame 1100. More specifically, the cover parts 1200 may be respectively located above the pair of battery cell arrays 100 mounted on the lower pack frame 1100.

In accordance with the independent claim 1, there is provided a plurality of cover parts 1200 divided for each pair of battery cell arrays 100 as shown in Figs. 1 and 2. Further, unlike Figs. 1 and 2, the plurality of cover parts 1200 may be configured such that they are integrated with each other.

According to the invention, a first venting hole 1215 is formed on the cover part 1200. More specifically, the first venting hole 1215 may be formed in the upper part of the cover part 1200, and also may be formed in the upper center of the cover part 1200. Further, the venting part 1300 covers the first venting hole 1215 formed on each one of the plurality of cover parts 1200. In other words, the first venting hole 1215 may be formed at a position facing the venting part 1300.

Here, the first venting hole 1215 may extend along the width direction of the cover part 1200. According to the inventioon the first venting hole 1215 extends along the longitudinal direction of the venting part 1300.

Thereby, in the battery pack 1000 according to an embodiment of the present invention, when an ignition phenomenon occurs in a part of the battery cell arrays 100, a high-temperature gas and a flame may be discharged through the first venting hole 1215 of the cover part 1200 that are located in the upper part of the battery cell arrays 100. In addition, the gas and flame discharged through the first venting hole 1215 can be flowed into the venting part 1300 to guide venting in the longitudinal direction of the venting part 1300, thereby preventing a heat propagation between adjacent battery cell arrays 100.

Fig. 3 is a perspective view which shows the remaining components excluding a cover part and a venting part in the battery pack of Fig. 1.

Referring to Figs. 1 and 3, the battery pack 1000 according to an embodiment of the present invention may be configured that a plurality of battery cell arrays 100 are mounted on a lower pack frame 1100.

Wherein, the battery cell 110 is preferably a pouch-type battery cell. As an example, the battery cell 110 can be manufactured by housing the electrode assembly in a pouch case of a laminated sheet containing a resin layer and a metal layer, and then heat-sealing a sealing portion of the pouch case. Such a battery cell 110 may be formed in a rectangular sheet-like structure. Such a battery cell 110 may be configured by a plurality of number, and the plurality of battery cells 110 can be stacked so as to be electrically connected to each other, thereby forming a battery cell array 100.

Further, the battery cell array 100 may have a structure in which a plurality of battery cells 110 are stacked, but at least a part of the components in the battery module unit are omitted. In other words, the battery cell array 100 may have a structure in which the components in a battery module unit are minimized. As an example, the battery cell array 100 may have a structure in which busbar frames are located on the front surface and the rear surface of the battery cell stack, but the module frame in the battery module unit is omitted. That is, the battery pack 1000 according to the present embodiment has a CTP (Cell To Pack) structure in which the battery cell array 100 in which at least a part of the battery module units are omitted is mounted directly on the lower pack frame 1100.

Thereby, in the battery pack 1000 according to the present embodiment, at least a part of the battery module units are omitted, so that the weight of the battery pack 1000 can be reduced and the battery capacity can also be improved. In addition, in the present embodiment, the cover part 1200 is mounted on the upper part of the battery cell array 100, and the battery cell array 100 is not exposed to the outside, so that that safety can be improved and the structural stiffness inside the battery pack 1000 can also be sufficiently secured.

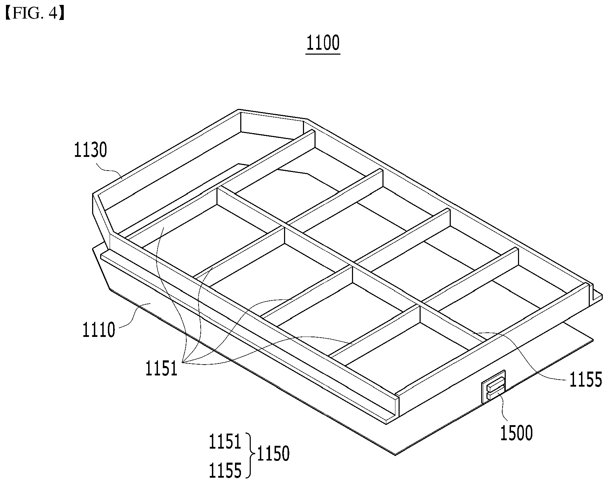

Fig. 4 is an exploded perspective view of a lower pack frame in the battery pack of Fig. 1.

Referring to Figs. 1, 3 and 4, in the battery pack 1000 according to an embodiment of the present disclosure, the lower pack frame 1100 may include a bottom part 1110 in contact with the lower surface of the battery cell array 100, and frame parts 1130 and 1150 in contact with at least one side of the battery cell array 100. Here, the bottom part 1110 and the frame parts 1130 and 1150 may be integrated with each other, or may be fixed to each other by a separate fastening method such as welding or bonding.

Here, the frame parts 1130 and 1150 can be formed of a heat insulating member. As an example, the frame parts 1130 and 1150 may be constituted of an aluminum extrusion structure. As another example, the frame parts 1130 and 1150 are made of a dissimilar metal bonding material such as clad metal, or may be a structure containing an insulating material such as aerogel or EPP (Expanded Polypropylenes) foam. However, the present disclosure is not limited thereto, and the frame parts 1130 and 1150 can be used without limitation as long as they are made of a heat insulating material having a predetermined stiffness.

Further, the frame parts 1130 and 1150 may include a side surface frame 1130 extending from the edge of the bottom 1110 toward the upper part, and an inner frame 1150 located inside the side surface frame 1130. Here, the plurality of battery cell arrays 100 may be divided each other by a side surface frame 1130 and an inner frame 1150.

More specifically, the inner frame 1150 may include a first inner frame 1151 extending along the width direction of the lower pack frame 1100 and a second inner frame 1155 extending along the longitudinal direction of the lower pack frame 1100. The pair of first inner frames 1151 may cover both side surfaces of the battery cell array 100. Further, as shown in Fig. 3, the second inner frame 1155 and the side surface frame 1130 may cover the front and rear surfaces of the battery cell array 100.

Thereby, the frame parts 1130 and 1150 may cover both side surfaces and the front and rear surfaces of the battery cell array 100, so that the battery cell array 100 can be protected from external impact and also the structural stiffness of the pack frame 1100 can also be secured. Further, the heat propagation between adjacent battery cell arrays 100 can be prevented, thus, preventing a short circuit between the battery cells 110.

Further, referring to Figs. 1, 3 and 4, at least one rupture part 1500 may be formed on the outer surface of the side surface frame 1130. Here, the rupture part 1500 may be located adjacent to one end of the venting part 1300. In other words, the rupture part 1500 is located on the outer surface of the side surface frame 1130 in contact with the end of the second inner frame 1155, but may be located adjacent to one end of the venting part 1300.

Further, the rupture part 1500 may be connected to the venting part 1300, like a rupture disc, and may include a rupture surface (not shown) configured to rupture when the pressure of the inflowing gas is a certain pressure or higher. However, the structure of the rupture part 1500 is not limited thereto, and it can be included in the present embodiment as long as it is a configuration that communicates with the passage of the venting part 1300 to enable discharge to the outside.

According to the above configuration, the venting part 1300 and the rupture part 1500 may be in communication with each other, whereby when an ignition phenomenon occurs in a part of battery cell arrays 100, the heat and flame are guided to the outside and the influence between adjacent battery cell arrays 100 can be minimized.

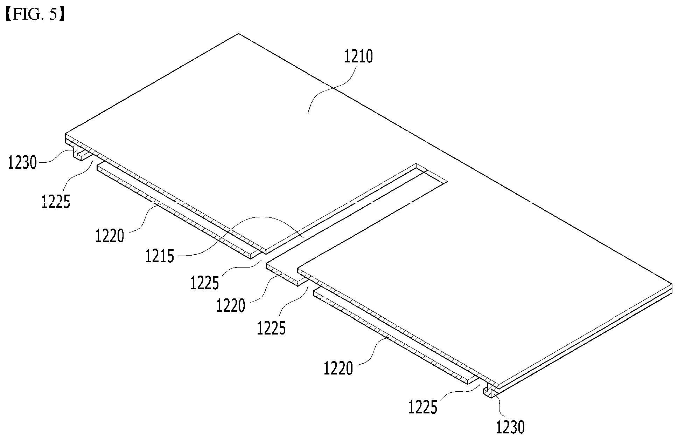

Fig. 5 is a cross-sectional view of the cover part of Fig. 2 taken along the cutting line C-C'.

Referring to Figs. 2 and 5, the cover part 1200 may include a first plate 1210, a second plate 1220 located under the first plate 1210, and a side surface part 1230 for connecting the edge of the first plate 1210 and the edge of the second plate 1220. Here, the first plate 1210, the second plate 1220, and the side surface part 1230 may be integrated with each other, or may be fixed to each other by a separate fastening method such as welding or bonding.

Further, a first venting hole 1215 may be formed in the central part of the first plate 1210. Here, the first venting hole 1215 may mean a portion that is opened in the first place 1210 by removing a part of the first plate 1210 as shown in Fig. 5.

Further, at least one second venting hole 1225 may be formed in the second plate 1220. Here, the second venting hole 1225 may be formed in a position adjacent to the front and rear surfaces of the battery cell array 100. More specifically, the cover part 1200 may be located in the upper part of the pair of battery cell arrays 100, and the second venting holes 1225 may be respectively formed at positions adjacent to the front and rear surfaces of the pair of battery cell arrays 100. As an example, as shown in Fig. 5, the four second venting holes 1225 may be respectively formed at positions adjacent to the front and rear surfaces of the pair of battery cell arrays 100. Here, the second venting hole 1225 may mean a portion that is opened in the second plate 1220 by removing a part of the second plate 1220, similarly to the first venting hole 1215.

Thereby, in the battery pack 1000 according to the present embodiment, when an ignition phenomenon occurs in a part of battery cell arrays 100, the gas and flame flow into the cover part 1200 through the second venting holes 1225 located adjacent to the front and rear surfaces of the battery cell array 100, and the gas and flame that have flowed into the second venting hole 1225 can be discharged toward the venting part 1300 through the first venting hole 1215.

Further, a lower surface of the second plate 1220 may make contact with an upper part of the battery cell array 100. More specifically, in the present embodiment, the cover part 1200 makes contact with the upper part of the battery cell array 100, and can be fastened by pressing the upper part of the battery cell array 100.

Thereby, the cover part 1200 acts as a support frame that stably supports the battery cell array 100 during normal times, other than when an ignition phenomenon occurs, thereby improving the stability while securing structural stiffness of the battery pack 1000.

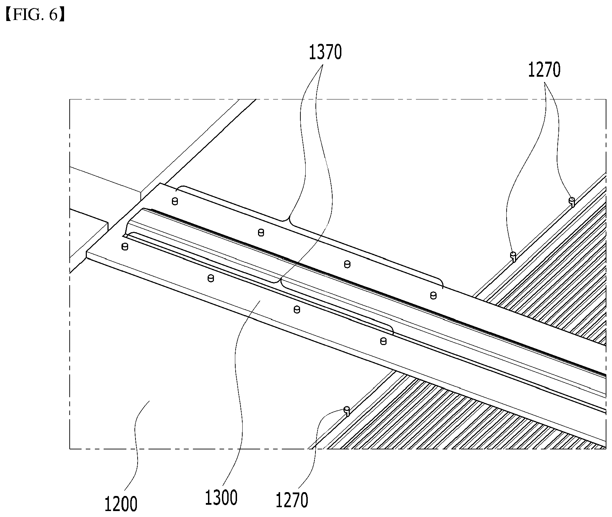

Fig. 6 is an enlarged view of a region a of Fig. 1.

Referring to Figs. 1, 3 and 6 , in the battery pack 1000 according to the present embodiment, the cover part 1200 and the venting part 1300 may be fixed to the lower pack frame 1100 by the first fastening member 1270 and the second fastening member 1370.

More specifically, the first fastening member 1270 can fix a part of the edge of the cover part 1200 to the upper part of the inner frame 1150. Further, the second fastening member 1370 can fix a part of the edge of the venting part 1300 to the upper surface of the cover part 1200.

As an example, the first fastening member 1270 and the second fastening member 1370 may be composed of a sealing weld bolt. As another example, the first fastening member 1270 and the second fastening member 1370 are respectively formed by at least one of a metal joining by spot welding, a rivet joining, and a structural sealant joining. However, the first fastening member 1270 and the second fastening member 1370 are not limited thereto, and can be included in the present embodiment as long as it is a configuration or method capable of stably fixing the cover part 1200 and the venting part 1300 to the lower pack frame 1100.

Thereby, in the battery pack 1000 according to the present embodiment, the cover part 1200 and the venting part 1300 can be stably fixed to the lower pack frame 1100 by the first fastening member 1270 and the second fastening member 1370, thereby improving the structural stability of the battery pack 1000. Further, the space between the cover part 1200 and the venting part 1300 can be sealed, so that when an ignition phenomenon occurs in a part of battery cell arrays 100, the generated flames and gases may not leak between the cover part 1200 and the venting part 1300.

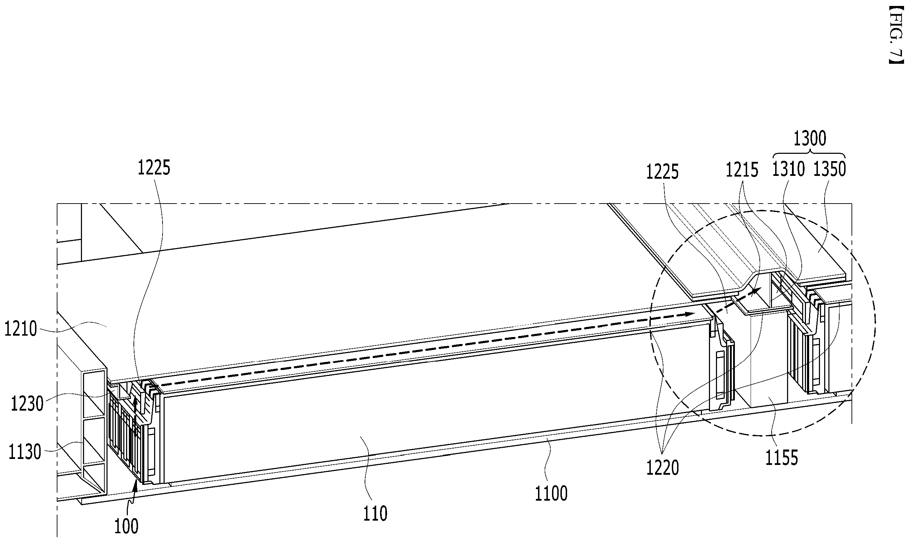

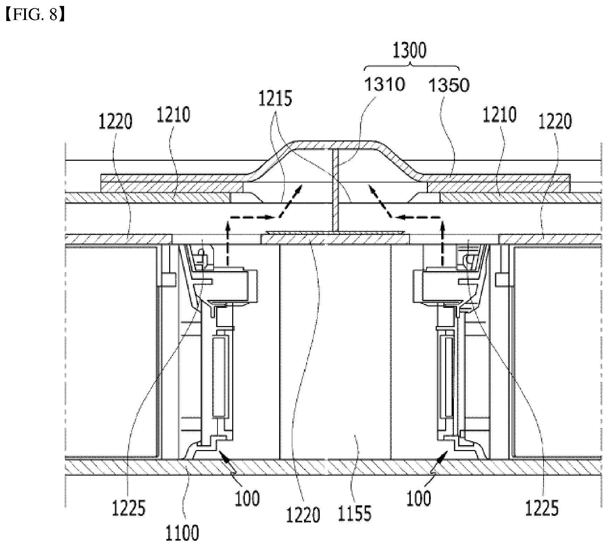

Fig. 7 is a diagram which shows a part of a cross section taken along the cutting line A-A' of Fig. 1. Fig. 8 is a diagram which enlarges and shows a part of Fig. 7.

Referring to Figs. 1, 7 and 8, when an ignition phenomenon occurs in the battery cell array 100, the gas and flame generated in the battery cell array 100 can flow into the second venting hole 1225 adjacent to the front and rear surfaces of the battery cell array 100. Further, the gas that has flowed into the second venting hole 1225 may move through the inside of the cover part 1200, and the moved gas and flame may flow into the venting part 1300 through the first venting hole 1215.

Thereby, in the battery pack 1000 according to the present embodiment, the gas and flame generated in a part of the battery cell arrays 100 can guide venting along the width direction of the battery pack 1000 through the cover part 1200 and the venting part 1300, thereby preventing the heat propagation between adjacent battery cell arrays 100.

Further, referring to Figs. 7 and 8, in the battery pack 1000 according to the present embodiment, the venting part 1300 may include a first venting part 1350 extending along the longitudinal direction of the cover part 1200 and a second venting part 1310 extending in a direction perpendicular to the first venting part 1350. More specifically, the second venting part 1310 may extend up to the bottom surface of the cover part 1200 through the center of the first venting hole 1215.

Thereby, in the battery pack 1000 according to the present embodiment, the venting part 1300 may be divided by the second venting part 1310, so that the gas and the flame flowing into the venting part 1300 can be prevented from being transmitted to each other between the pair of battery cell arrays 100 and causing heat propagation.

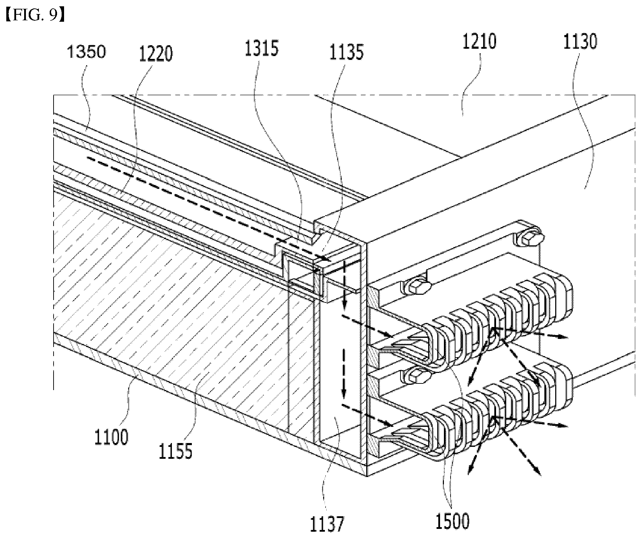

Fig. 9 is a diagram which shows a part of a cross section taken along the cutting line B-B' of Fig. 1.

Referring to Figs. 1 and 9, the gas and flame flowing through the venting part 1300 may move toward the rupture part 1500 formed in the side surface frame 1130, and the rupture part 1500 may be ruptured when the pressure is not less than the predetermined value, so that high-temperature gas and flame may be discharged to the outside.

Here, at least one through part 1135 may be formed on the inner surface of the side surface frame 1130. Here, the through part 1135 can communicate with one end 1315 of the venting part 1300 as shown in Fig. 9. Further, a gas collection part 1137 capable of collecting gas and flame may be formed inside the side surface frame 1130. As an example, the gas collection part 1137 may have a size corresponding to the size of the rupture part 1500.

More specifically, the gas and flame flowing in through the venting part 1300 may move to the gas collection part 1137 through the through part 1135 communicating with one end 1315 of the venting part 1300. Additionally, when the pressure of the gas and the flame collected in the gas collection part 1137 is equal to or greater than a predetermined pressure, the rupture part 1500 may rupture and the gas and the flame can0 be discharged to the outside of the side surface frame 1130 .

Thereby, in the battery pack 1000 according to the present embodiment, the gas and flame flowing into the venting part 1300 through the venting part 1300 and the rupture part 1500 can guide venting along the longitudinal direction of the battery pack 1000, so that gases and flames can be effectively discharged to the outside while preventing heat propagation between adjacent battery cell arrays 100.

The device according to another embodiment of the present invention include the above-mentioned battery pack. Such a device can be applied to a vehicle means such as an electric bicycle, an electric vehicle, or a hybrid vehicle, but the present invention is not limited thereto, and is applicable to various devices that can use a battery module and a battery pack including the same, which is also falls within the scope of the present invention.

Although preferred embodiments of the present disclosure have been described in detail above, the scope of the present invention is defined by the appended claims.

### [Description of Reference Numerals]

100: battery cell array
1000: battery pack
1100: lower pack frame
1200: cover part
1300: venting part
1500: rupture part

## Claims

1. A battery pack (1000) comprising:
a lower pack frame (1100) on which a plurality of battery cell arrays (100) are mounted;
a plurality of cover parts (1200), wherein each one of the plurality of cover parts (1200) is located in an upper part of a respective pair of battery cell arrays (100) of the plurality of battery cell arrays (100); and
a venting part (1300) that is mounted on the plurality of cover parts (1200) and extends along the longitudinal direction of the lower pack frame (1100),
wherein each one of the plurality of cover parts (1200) covers the upper part of the respective pair of battery cell arrays (100) arranged so as to face each other with respect to the width direction of the lower pack frame (1100), and
wherein a first venting hole (1215) is formed on each one of the plurality of cover parts (1200) and extends along the longitudinal direction of the venting part (1300), and the venting part (1300) covers the first venting hole (1215).

2. The battery pack (1000) according to claim 1, wherein:
each one of the plurality of cover parts (1200) comprises a first plate (1210), a second plate (1220) located in a lower part of the first plate (1210), and a side surface part (1230) that connects an edge of the first plate (1210) and an edge of the second plate (1220).

3. The battery pack (1000) according to claim 2, wherein:
the first venting hole (1215) is formed in a central part of the first plate (1210).

4. The battery pack (1000) according to claim 3, wherein:
a lower surface of the second plate (1220) makes contact with an upper part of the battery cell array (100).

5. The battery pack (1000) according to claim 4, wherein:
at least one second venting hole (1225) is formed in the second plate (1220), with the second venting hole (1225) being formed at a position adjacent to the front and rear surfaces of the battery cell array (100).

6. The battery pack (1000) according to claim 1, wherein:
the venting part (1300) comprises a first venting part (1350) extending along the length direction of the plurality of cover parts (1200) and a second venting part (1310) extending in a direction perpendicular to the first venting part (1350).

7. The battery pack (1000) according to claim 6, wherein:
the second venting part (1310) extends up to the bottom surface of the plurality of cover parts (1200) through the center of the first venting hole (1215).

8. The battery pack (1000) according to claim 1, wherein:
the lower pack frame (1100) comprises a bottom part (1110) in contact with the lower surface of the battery cell array (100), and a frame part (1130, 1150) in contact with at least one side surface of the battery cell array (100).

9. The battery pack (1000) according to claim 8, wherein:
the frame part (1130, 1150) is made of a heat insulating member.

10. The battery pack (1000) according to claim 8, wherein:
the frame part (1130, 1150) comprises a side surface frame (1130) extending from the edge of the bottom part toward the upper part, and an inner frame (1150) located inside the side surface frame (1130), and
the plurality of battery cell arrays (100) are divided each other by the side surface frame (1130) and the inner frame (1150).

11. The battery pack (1000) according to claim 10,
further comprising a first fastening member (1270) that fixes a part of an edge of a cover part (1200) of the plurality of cover parts (1200) to an upper part of the inner frame (1150), and
further comprising a second fastening member (1370) that fixes a part of an edge of the venting part (1300) to an upper surface of a cover part of the plurality of cover parts (1200).

12. The battery pack (1000) according to claim 10, wherein:
at least one rupture part (1500) is formed on the outer surface of the side surface frame (1130), and
the rupture part (1500) is located adjacent to one end of the venting part (1300).

13. The battery pack (1000) according to claim 12, wherein:
at least one through part (1135) is formed on the inner surface of the side surface frame (1130), and
the through part (1135) communicates with one end of the venting part (1300).

14. A device comprising the battery pack (1000) of claim 1.

## Patentansprüche

1. Batteriepack (1000), umfassend:
einen unteren Packrahmen (1100), auf dem eine Vielzahl von Batteriezellenanordnungen (100) montiert sind;
eine Vielzahl von Abdeckteilen (1200), wobei jedes der Vielzahl von Abdeckteilen (1200) in einem oberen Teil eines jeweiligen Paars von Batteriezellenanordnungen (100) der Vielzahl von Batteriezellenanordnungen (100) angeordnet ist; und
ein Entlüftungsteil (1300), das auf der Vielzahl von Abdeckteilen (1200) montiert ist und sich entlang der Längsrichtung des unteren Packrahmens (1100) erstreckt,
wobei jedes der Vielzahl von Abdeckteilen (1200) den oberen Teil des jeweiligen Paars von Batteriezellenanordnungen (100) abdeckt, die so angeordnet sind, dass sie einander in Bezug auf die Breitenrichtung des unteren Packrahmens (1100) zugewandt sind, und
wobei eine erste Entlüftungsöffnung (1215) an jedem der Vielzahl von Abdeckteilen (1200) ausgebildet ist und sich entlang der Längsrichtung des Entlüftungsteils (1300) erstreckt, und das Entlüftungsteil (1300) die erste Entlüftungsöffnung (1215) abdeckt.

2. Batteriepack (1000) nach Anspruch 1, wobei:
jedes der Vielzahl von Abdeckteilen (1200) eine erste Platte (1210), eine zweite Platte (1220), die in einem unteren Teil der ersten Platte (1210) angeordnet ist, und ein Seitenflächenteil (1230) umfasst, das eine Kante der ersten Platte (1210) und eine Kante der zweiten Platte (1220) verbindet.

3. Batteriepack (1000) nach Anspruch 2, wobei:
die erste Entlüftungsöffnung (1215) in einem zentralen Teil der ersten Platte (1210) ausgebildet ist.

4. Batteriepack (1000) nach Anspruch 3, wobei:
eine untere Fläche der zweiten Platte (1220) mit einem oberen Teil der Batteriezellenanordnung (100) in Kontakt steht.

5. Batteriepack (1000) nach Anspruch 4, wobei:
mindestens eine zweite Entlüftungsöffnung (1225) in der zweiten Platte (1220) ausgebildet ist, wobei die zweite Entlüftungsöffnung (1225) an einer Position benachbart zu den vorderen und hinteren Flächen der Batteriezellenanordnung (100) ausgebildet ist.

6. Batteriepack (1000) nach Anspruch 1, wobei:
das Entlüftungsteil (1300) einen ersten Entlüftungsteil (1350), der sich entlang der Längsrichtung der Vielzahl von Abdeckteilen (1200) erstreckt, und einen zweiten Entlüftungsteil (1310) umfasst, der sich in einer Richtung senkrecht zum ersten Entlüftungsteil (1350) erstreckt.

7. Batteriepack (1000) nach Anspruch 6, wobei:
sich der zweite Entlüftungsteil (1310) bis zur Bodenfläche der Vielzahl von Abdeckteilen (1200) durch die Mitte der ersten Entlüftungsöffnung (1215) erstreckt.

8. Batteriepack (1000) nach Anspruch 1, wobei:
der untere Packrahmen (1100) einen Bodenteil (1110), der in Kontakt mit der unteren Fläche der Batteriezellenanordnung (100) steht, und einen Rahmenteil (1130, 1150), der in Kontakt mit mindestens einer Seitenfläche der Batteriezellenanordnung (100) steht, umfasst.

9. Batteriepack (1000) nach Anspruch 8, wobei:
der Rahmenteil (1130, 1150) aus einem wärmeisolierenden Element hergestellt ist.

10. Batteriepack (1000) nach Anspruch 8, wobei:
der Rahmenteil (1130, 1150) einen Seitenflächenrahmen (1130), der sich von der Kante des Bodenteils zum oberen Teil erstreckt, und einen Innenrahmen (1150), der sich innerhalb des Seitenflächenrahmens (1130) befindet, umfasst, und
die Vielzahl von Batteriezellenanordnungen (100) durch den Seitenflächenrahmen (1130) und den Innenrahmen (1150) voneinander geteilt sind.

11. Batteriepack (1000) nach Anspruch 10,
ferner umfassend ein erstes Befestigungselement (1270), das einen Teil einer Kante eines Abdeckteils (1200) der Vielzahl von Abdeckteilen (1200) an einem oberen Teil des Innenrahmens (1150) befestigt, und
ferner umfassend ein zweites Befestigungselement (1370), das einen Teil einer Kante des Entlüftungsteils (1300) an einer oberen Fläche eines Abdeckteils der Vielzahl von Abdeckteilen (1200) befestigt.

12. Batteriepack (1000) nach Anspruch 10, wobei:
mindestens eine Bruchstelle (1500) an der Außenfläche des Seitenflächenrahmens (1130) ausgebildet ist, und
die Bruchstelle (1500) benachbart zu einem Ende des Entlüftungsteils (1300) angeordnet ist.

13. Batteriepack (1000) nach Anspruch 12, wobei:
mindestens ein Durchgangsteil (1135) an der Innenfläche des Seitenflächenrahmens (1130) ausgebildet ist, und
der Durchgangsteil (1135) mit einem Ende des Entlüftungsteils (1300) in Verbindung steht.

14. Vorrichtung, umfassend das Batteriepack (1000) nach Anspruch 1.

## Revendications

1. Un bloc-batterie (1000) comprenant :
un bâti de bloc inférieur (1100) sur lequel une pluralité de réseaux de cellules de batterie (100) sont montés ;
une pluralité de parties de couvercle (1200), dans lequel chacune de la pluralité de parties de couvercle (1200) est située dans une partie supérieure d'une paire respective de réseaux de cellules de batterie (100) de la pluralité de réseaux de cellules de batterie (100) ; et
une partie d'évent (1300) qui est montée sur la pluralité de parties de couvercle (1200) et s'étend le long de la direction longitudinale du bâti de bloc inférieur (1100),
dans lequel chacune de la pluralité de parties de couvercle (1200) couvre la partie supérieure de la paire respective de réseaux de cellules de batterie (100) agencés de manière à se faire face l'un l'autre par rapport à la direction de la largeur du bâti de bloc inférieur (1100), et
dans lequel un premier trou d'évent (1215) est formé sur chacune de la pluralité de parties de couvercle (1200) et s'étend le long de la direction longitudinale de la partie d'évent (1300), et la partie de ventilation (1300) couvre le premier trou d'évent (1215).

2. Le bloc-batterie (1000) selon la revendication 1, dans lequel:
chacune de la pluralité de parties de couvercle (1200) comprend une première plaque (1210), une seconde plaque (1220) située dans une partie inférieure de la première plaque (1210), et une partie de surface latérale (1230) qui relie un bord de la première plaque (1210) et un bord de la seconde plaque (1220).

3. Le bloc-batterie (1000) selon la revendication 2, dans lequel:
le premier trou d'évent (1215) est formé dans une partie centrale de la première plaque (1210).

4. Le bloc-batterie (1000) selon la revendication 3, dans lequel:
une surface inférieure de la seconde plaque (1220) est en contact avec une partie supérieure du réseau de cellules de batterie (100).

5. Le bloc-batterie (1000) selon la revendication 4, dans lequel:
au moins un second trou d'évent (1225) est formé dans la seconde plaque (1220), le second trou d'évent (1225) étant formé à une position adjacente aux surfaces avant et arrière du réseau de cellules de batterie (100).

6. Le bloc-batterie (1000) selon la revendication 1, dans lequel :
la partie d'évent (1300) comprend une première partie d'évent (1350) s'étendant le long de la direction de la longueur de la pluralité de parties de couvercle (1200) et une seconde partie d'évent (1310) s'étendant dans une direction perpendiculaire à la première partie d'évent (1350).

7. Le bloc-batterie (1000) selon la revendication 6, dans lequel:
la seconde partie d'évent (1310) s'étend jusqu'à la surface de fond de la pluralité de parties de couvercle (1200) à travers le centre du premier trou d'évent (1215).

8. Le bloc-batterie (1000) selon la revendication 1, dans lequel:
le bâti de bloc inférieur (1100) comprend une partie de fond (1110) en contact avec la surface inférieure du réseau de cellules de batterie (100), et une partie de bâti (1130, 1150) en contact avec au moins une surface latérale du réseau de cellules de batterie (100).

9. Le bloc-batterie (1000) selon la revendication 8, dans lequel:
la partie de bâti (1130, 1150) est constituée d'un élément thermiquement isolant.

10. Le bloc-batterie (1000) selon la revendication 8, dans lequel:
la partie de bâti (1130, 1150) comprend un bâti de surface latérale (1130) s'étendant du bord de la partie de fond vers la partie supérieure, et un bâti intérieur (1150) situé à l'intérieur du bâti de surface latérale (1130), et
la pluralité de réseaux de cellules de batterie (100) sont divisés les uns des autres par le bâti de surface latérale (1130) et le bâti intérieur (1150).

11. Le bloc-batterie (1000) selon la revendication 10,
comprenant en outre un premier élément de fixation (1270) qui fixe une partie d'un bord d'une partie de couvercle (1200) de la pluralité de parties de couvercle (1200) à une partie supérieure du bâti intérieur (1150), et
comprenant en outre un second élément de fixation (1370) qui fixe une partie d'un bord de la partie d'évent (1300) à une surface supérieure d'une partie de couvercle de la pluralité de parties de couvercle (1200).

12. Le bloc-batterie (1000) selon la revendication 10, dans lequel:
au moins une partie de rupture (1500) est formée sur la surface extérieure du bâti de surface latérale (1130), et
la partie de rupture (1500) est située de manière adjacente à une extrémité de la partie d'évent (1300).

13. Le bloc-batterie (1000) selon la revendication 12, dans lequel:
au moins une partie traversante (1135) est formée sur la surface intérieure du bâti de surface latérale (1130), et
la partie traversante (1135) communique avec une extrémité de la partie d'évent (1300).

14. Un dispositif comprenant le bloc-batterie (1000) de la revendication 1.
